# EUROPEAN PATENT APPLICATION

(11) **EP 2 398 166 A2**
(43) Date of publication of application: **21.12.2011**
(21) Application number: 10741412.0
(22) Date of filing: 12.02.2010
(51) Int. Cl.: H04B 10/13, H04B 10/04

(54) **LOW-NOISE OPTICAL SIGNAL TRANSMITTER WITH LOW-NOISE MULTI-WAVELENGTH LIGHT SOURCE, BROADCAST SIGNAL TRANSMITTER USING LOW-NOISE MULTI-WAVELENGTH LIGHT SOURCE, AND OPTICAL NETWORK WITH THE SAME**

(30) Priority: 13.02.2009 KR 20090011861; 19.06.2009 KR 20090055072
(71) Applicant: Korea Advanced Institute of Science and Technology, Daejeon-si 305-701 (KR)
(72) Inventor: LEE, Chang-Hee, Daejeon 305-701 (KR); KIM, Joon-Young, Kwangju 502-738 (KR); LEE, Jong-Hoon, Daegu 701-300 (KR); MUN, Sil-Gu, Daegu 702-769 (KR); MOON, Jung-Hyung, Pusan 617-020 (KR); LEE, Hoon-Keun, Kyungsangbukdo 712-786 (KR); OH, Sang-Min, Kyungsangnamdo 621-769 (KR); MUN, Sang-Rok, Jeonranamdo 530-380 (KR)
(74) Representative: Grunert, Marcus
(86) International application number: PCT/KR2010/000901
(87) International publication number: WO 2010/093195

(57) **Abstract**

The present invention discloses a transmission device of a low-noise optical signal having a low-noise multi-wavelength light source, a transmission device of broadcast signals using a low-noise multi-wavelength light source, and an optical access network having the same.

The present invention uses a low-noise multi-wavelength light source (LMLS) which has sufficiently low noises at respective wavelengths, while being lasing at a multi-wavelength. Noises at respective wavelengths are not increased, even though an output light of such an LMLS passes through a wavelength division multiplexer/demultiplexer (a tunable optical filter or an arrayed waveguide grating (AWG), etc.). When using an LMLS, it is possible to embody an optical access network capable of transmitting optical signals at a high-speed and simultaneously transmitting a multicast signal. Further, when embodying an optical amplifier by using a gain medium for an LMLS, it is possible to obtain gain at a broad band without cross-coupling.

## Description

### Technical Field

The present invention relates to a transmission device of a low-noise optical signal having a low-noise multi-wavelength light source, a transmission device of broadcast signals using a low-noise multi-wavelength light source, and an optical access network having the same. More specifically, the present invention relates to a transmission device of a low-noise optical signal having a low-noise multi-wavelength light source, a transmission device of broadcast signals using a low-noise multi-wavelength light source, and an optical access network having the same where the noise such as mode partition noise, etc. is sufficiently low even in case of selecting respective wavelengths while a light source is lasing at a multi-wavelength.

### Background Art

Currently, a demand for the services of "fiber to the home" (FTTH) is constantly increasing, and a demand for a high transmission speed per subscriber is also increasing. Since the year of 1983, a required internet bandwidth has been increased approximately by 50% every year. According to such an increasing amount of the internet bandwidth, it is expected that a bandwidth of 100Mbps will be required in the year of 2010. A wavelength division multiplexed-passive optical network (WDM-PON) technology has been in the spotlight in order to procure such a rapidly increasing bandwidth. In order to operate such a WDM-PON effectively, a light source that is cheap and capable of transmitting signals at a high speed is necessarily required.

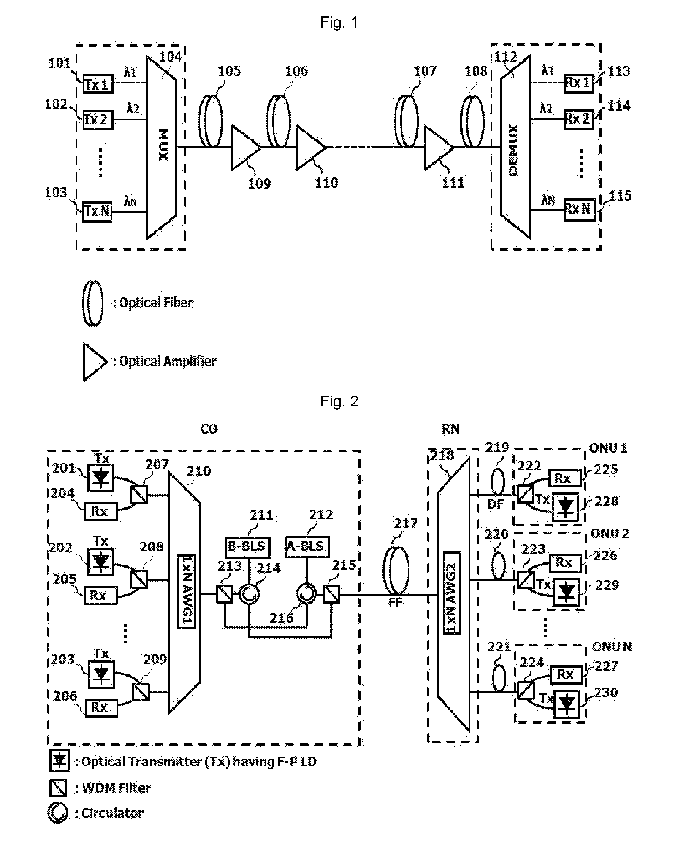

Fig. 1 illustrates a schematic view of an optical transmission device of a general wavelength division multiplexed optical communications network.

Referring Fig. 1, N-numbered transmission devices (Tx: Tx1,Tx2,...,TxN) (101,102,...,103) for outputting optical signals having specific wavelengths which are different from one another and one 1xN multiplexer (MUX) (104) for multiplexing output signals of the N-numbered transmission devices are installed at a transmitting end. One 1xN demultiplexer (DEMUX) (112) for dividing the received signals depending on wavelengths and N-numbered receivers (Rx: Rx1,Rx2,...,RxN) (113,114,...,115) for converting the signals received depending on the respective wavelengths into electric signals are installed at a receiving end. The transmitting end and the receiving end are connected through a single optical fiber, and one or more optical amplifiers are inserted between the transmitting end and the receiving end to amplify the optical signals when a transmission distance is long.

In a wavelength division multiplexed optical communications network and an optical access network, because signals are multiplexed/demultiplexed by using wavelengths, a light source being used should be lasing at a determined wavelength and maintain its lasing state. Therefore, it is required to use an expensive light source with high stability per a respective determined wavelength, and such a requirement becomes a most significant factor that lowers economic efficiency of a wavelength division multiplexed optical communications network and an optical access network.

One method for solving the problem of using an expensive slight source described above, according to prior art, is to use a cost-effective light source which is wavelength-locked by injected incoherent broadband light.

Fig. 2 illustrates a schematic view of a cheap light source which is wavelength-locked by injected incoherent broadband light and a wavelength division multiplexed optical access network using the same, according to prior art. Such prior art illustrated in Fig. 2 is described in detail in an article entitled "A low-cost WDM source with an ASE injected Fabry-Perot semiconductor laser," which has been published in "IEEE Photonic Technology Letters, vol. 12, no. 8, pp. 1067-1069" by Hyun Deok Kim, Seoung-Goo Kang, and Chang-Hee Lee.

Referring to Fig. 2, B-band ASE (amplified spontaneous emission) light emitted from a B-band incoherent broadband light source (B-BLS) (211) at a central office (CO) passes through a first optical light splitter comprising a first circulator (CIR1) (214) and a first WDM filter (WDM1) (213) and a first arrayed waveguide grating (AWG1) (210), and is injected into a plurality of optical transmitters (Tx) (201,202,...,203) having a Fabry-Perot Laser Diode (F-P LD) at the CO so that wavelength-locked optical signals are generated. Such wavelength-locked optical signals become down-stream signals which are transmitted from the CO to a plurality of optical network units (ONU) (ONU 1,ONU 2,...,ONU N). Meanwhile, A-band ASE light emitted from an A-band incoherent broadband light source (A-BLS) (212) at the CO passes through a second optical splitter comprising a second circulator (CIR2) (216) and a second WDM filter (WDM2) (215), an optical cable (a single optical fiber) (217), and a second AWG2 (218) within a remote node (RN), and is injected into optical transmitters (Tx) (228,229,...,230) of the plurality of ONU (ONU 1,ONU 2,...,ONU N) having an F-P LD so that wavelength-locked optical signals are generated. Such wavelength-locked optical signals become up-stream signals which are transmitted from the plurality of ONU (ONU 1,ONU 2,...,ONU N) to the CO. Herein, a first optical splitter and a second optical splitter are respectively embodied by a 3dB 2x2 optical splitter, and a first AWG 1 (210) and a second AWG 2 (218) are respectively embodied by a 1xN AWG.

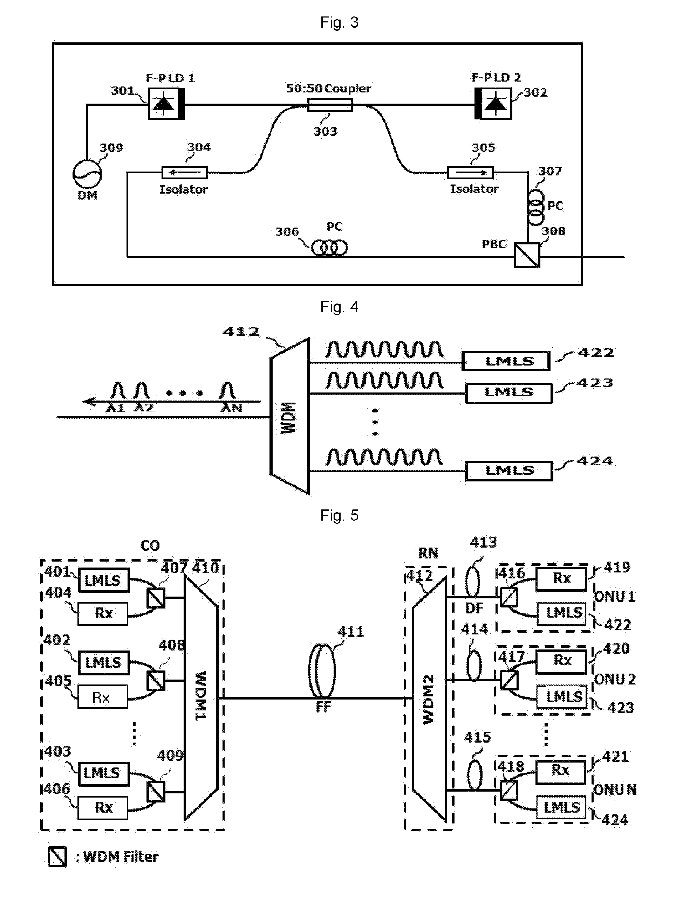

An optical transmission device which is wavelength-locked by incoherent broadband light described above has an advantage that may be embodied by using a cheap F-P LD. Further, wavelengths of an F-P LD are selected by a wavelength of an incoherent broadband light source which is filtered through an AWG and thus have an advantage of having a color-free characteristic that is independently of wavelength. However, because a noise characteristic of optical signals is influenced by a noise of injected incoherent broadband light in an optical transmission device which is wavelength-locked by incoherent broadband light according to prior art described above, there is a certain limitation relating to achieving a high-speed transmission (10 Gb/s or more per subscriber) of an optical communications network and it cannot suggest an appropriate alternative satisfying various requirements such as acceptability of broadcast signals of IP-TV in a WDM-PON, and subscriber-metro integrity, etc. Fig. 3 illustrates a view of a low-noise broadband light source embodied through a mutual injection of an F-P LD according to prior art. Such prior art illustrated in Fig. 3 is described in detail in an article entitled "A Low-Noise Broadband Light Source for a WDM-PON based on Mutually Injected Fabry-Perot Laser Diodes With RF Modulation," which has been published in "IEEE Photonic Technology Letters, vol. 20, no. 24, pp. 2072-2074" by Ki Man Choi and Chang-Hee Lee.

Referring back to Fig. 3, an F-P LD1 (301) which is modulated by a direct modulator (DM) (309) and a non-modulated F-P LD2 (302) are mutually injected by a 50:50 optical coupler (OC) (303) and then are outputted. Output beams pass through optical isolators (304,305) and have polarization directions that are perpendicular each other by polarization controllers (PC) (306,307). After that, two polarized beams are combined by a polarization beam combiner (PBC) (308) and form a non-polarized broadband light source. A non-polarized broadband light source is lasing at a multi-wavelength and has a very low noise characteristic at a specific frequency band.

However, a low-noise broadband light source embodied through a mutual injection of an F-P LD according to prior art described above has a disadvantage that it does not have a low-noise characteristic at other bands (especially, a high frequency band) except a specific frequency band. As a result, even the low-noise broadband light source embodied through a mutual injection of an F-P LD has also a problem that it is not appropriate to be used in an optical communications network which requires an achievement of high-speed (10 Gb/s or more per subscriber), likewise in a WDM optical transmission device which is wavelength-locked by incoherent broadband light according to prior art described above.

### Detailed Description

### Technical Problem

An object of the present invention is designed to solve the prior art problems and to provide a transmission device of a low-noise optical signal having a low-noise multi-wavelength light source, a transmission device of broadcast signals using a low-noise multi-wavelength light source, and an optical access network having the same where the noise such as mode partition noise, etc. is sufficiently low even in case of selecting respective wavelengths while a light source is lasing at a multi-wavelength.

A low-noise multi-wavelength light source being used in the present invention described above may be embodied by using a light source having an inhomogeneous broadening feature, a light source through modulation, and a light source using a mutual injection of an F-P LD, etc.

Another object of the present invention is to amplify optical signals, which are wavelength division multiplexed, simultaneously, and reduce noises by embodying an optical amplifier using a gain medium for a low-noise multi-wavelength light source (LMLS) of the present invention.

Still another object of the present invention is to provide a WDM optical access network using a light source for a WDM optical communications network and thus is designed to achieve a high-speed in a transmission speed and to lower the system costs.

Still another object of the present invention is to provide a WDM optical access network capable of accommodate a multicast signal transmission device by using a low-noise multi-wavelength light source.

### Technical Solution

In order to accomplish the above objects, the present invention employs a low-noise multi-wavelength light source (LMLS). An output light of such an LMLS has a characteristic that noises at respective wavelengths are not increased, even though the output light passes through wavelength division multiplexer/demultiplexer.

A transmission device of a low-noise optical signal according to a first aspect of the present invention comprises a plurality of low-noise multi-wavelength light sources (LMLS); and one wavelength division multiplexer/demultiplexer (WDM) being connected to the plurality of LMLS, respectively, and having one input port and N-numbered output ports (N ≥ 1), wherein output lights of the plurality of LMLS are respectively inputted into the output ports of the WDM and then are spectrum-divided, and wherein the spectrum-divided optical signals are respectively multiplexed at the WDM and outputted through the input port.

A wavelength division multiplexed optical access network having a transmission device of a low-noise optical signal according to a second aspect of the present invention comprises a central office (CO); a remote node (RN); a plurality of optical network units (ONU 1,ONU 2,...,ONU N); a feeder fiber (FF) for connecting the CO and the RN; and a plurality of distribution fibers (DF), wherein the CO comprises: a first wavelength division multiplexer/demultiplexer (WDM1); a plurality of first WDM filters, being connected to the first WDM1, for splitting up-stream signals and down-stream signals; a plurality of first optical receivers (Rx), being connected to the plurality of first WDM filters, respectively, for receiving the up-stream signals; and a plurality of first low-noise multi-wavelength light sources (LMLS) being connected to the plurality of first WDM filters, respectively, wherein the RN comprises a second wavelength division multiplexer/demultiplexer (WDM2) for multiplexing the up-stream signals inputted from the plurality of optical network units (ONU 1,ONU 2,...,ONU N), and wherein the plurality of optical network units (ONU 1,ONU 2,...,ONU N) comprises: a plurality of second WDM filters, being connected to an output end of the second WDM2 of the RN, for splitting the up-stream signals and the down-stream signals; a plurality of second optical receivers (Rx), being connected to the plurality of second WDM filters, respectively, for receiving the down-stream signals; and a plurality of second low-noise multi-wavelength light sources (LMLS) being connected to the plurality of second optical receivers (Rx), respectively.

A transmission device of a low-noise optical signal according to a third aspect of the present invention comprises one low-noise multi-wavelength light sources (LMLS); and one wavelength division multiplexer/demultiplexer (WDM) being is connected to the one LMLS and having one input port and N-numbered output ports (N ≥ 1), wherein an output light of the LMLS is inputted into the input port of the WDM and then is spectrum-divided into N-numbered lights (λ1,λ2,...,λN), and wherein the spectrum-divided N-numbered lights (λ1,λ2,...,λN) are respectively low-noise lights having narrow bands with different center wavelengths.

A wavelength division multiplexed optical network having a transmission device of a low-noise optical signal according to a fourth aspect of the present invention comprises a central office (CO); a remote node (RN) including a second wavelength division multiplexer/demultiplexer (WDM2); a plurality of optical network units (ONU 1, ONU 2,..., ONU N); a feeder fiber (FF) for connecting the CO and the RN; and a plurality of distribution fibers (DF) for connecting the RN and the plurality of optical network units (ONU 1,ONU 2,...,ONU N), wherein the CO comprises: a plurality of first optical transceivers (TRx) comprising a plurality of first optical receivers (Rx) and a plurality of first optical transmitters (Tx); a plurality of first WDM filters being connected to the plurality of first optical transceivers (TRx); a first wavelength division multiplexer/demultiplexer (WDM1) being connected to the plurality of first WDM filters; an A-band LMLS being lasing at an A-band; a B-band LMLS being lasing at a B-band; a first optical splitter, being connected to the B-band LMLS, for transmitting a first output light lased from the B-band LMLS to the first WDM1; and a second optical splitter, being connected to the A-band LMLS, for transmitting a second output light lased from the A-band LMLS to the second WDM2, wherein the first optical splitter comprises a first circulator (CIR1) being connected to the B-band LMLS, and a third WDM filter being connected to the first CIR1 and the first WDM1, respectively, wherein the second optical splitter comprises a second circulator (CIR2) being connected to the A-band LMLS and the third WDM filter, respectively, and a fourth WDM filter being connected to the first CIR1, the second CIR2, and the feeder fiber (FF), respectively, and wherein the plurality of optical network units (ONU 1,ONU 2,...,ONU N) comprises: a plurality of second optical transceivers (TRx) comprising a plurality of second optical receivers (Rx) and a plurality of second optical transmitters (Tx); and a plurality of second WDM filters being connected to the plurality of second optical transceivers (TRx).

A transmission device of a broadcast signal using a low-noise multi-wavelength light source according to a fifth aspect of the present invention comprises a low-noise multi-wavelength light source (LMLS); and an external modulator (EM) or a direct modulator (DM), being connected to the LMLS, for optical modulation of an output light of the LMLS into a broadcast signal.

A wavelength division multiplexed optical access network having a transmission device of a broadcast signal using a low-noise multi-wavelength light source according to a sixth aspect of the present invention comprises a central office (CO); a remote node (RN); a plurality of optical network units (ONU 1,ONU 2,...,ONU N); a feeder fiber (FF) for connecting the CO and the RN; and a plurality of distribution fibers (DF) for connecting the RN and the plurality of optical network units (ONU 1,ONU 2,...,ONU N), wherein the CO comprises: a low-noise multi-wavelength light source (LMLS) being lasing at a band different from up-stream data optical signals and down-stream data signals, respectively; an external modulator (EM) or a direct modulator (DM) for modulating an output light of the LMLS into a broadcast signal; a WDM filter for combining the down-stream data optical signals, which are multiplexed, and an optical signal which is modulated into the broadcast signal through the EM or the DM; a first wavelength division multiplexer/demultiplexer (WDM1) for wavelength division demultiplexing the up-stream data optical signals; a plurality of first WDM filters, being connected to the first WDM1, for splitting the up-stream data optical signals and the down-stream data optical signals; a plurality of first optical receivers (Rx), being connected to the plurality of first WDM filters, respectively, for receiving the up-stream data optical signals; and a plurality of first optical transmitters (Tx), being connected to the plurality of first WDM filters, respectively, for outputting the down-stream data optical signals, wherein the RN comprises a second wavelength division multiplexer/demultiplexer (WDM2) for spectrum-dividing the down-stream data optical signals and transmitting them to the plurality of optical network units (ONU 1,ONU 2,...,ONU N) and for multiplexing the up-stream data optical signals being transmitted from the plurality of optical network units (ONU 1,ONU 2,...,ONU N), and wherein the plurality of optical network units (ONU 1,ONU 2,...,ONU N) comprises; a plurality of second WDM filters, being connected to an output end of the second WDM2, for splitting the up-stream data optical signals and the down-stream data optical signals; two pluralities of second optical receivers (Rx2-1/Rx2-2), being connected to the plurality of second WDM filters, respectively, for receiving the down-stream data optical signals; and a plurality of second optical transmitters (Tx), being connected to the plurality of second WDM filters, respectively, for outputting the up-stream data optical signals.

An optical access network for transmitting a down-stream data optical signal or a broadcast optical signal by using one low-noise multi-wavelength light source (LMLS) according to a seventh aspect of the present invention comprises a central office (CO); a remote node (RN); a plurality of optical network units (ONU 1,ONU 2,...,ONU N); a feeder fiber (FF) for connecting the CO and the RN; and a plurality of distribution fibers (DF) for connecting the RN and the plurality of optical network units (ONU 1,ONU 2,...,ONU N), wherein the CO comprises: a low-noise multi-wavelength light source (LMLS); an external modulator (EM) or a direct modulator (DM), being connected to the LMLS, for modulating an output light of the LMLS into a down-stream data optical signal or a broadcast optical signal; a first WDM filter for splitting the down-stream optical signal or the broadcast optical signal modulated through the EM or the DM and up-stream data optical signals; a first wavelength division multiplexer/demultiplexer (WDM1), being connected to the first WDM filter, for wavelength division demultiplexing the up-stream data optical signals; and a plurality of optical receivers (Rx), being connected to the first WDM1, for receiving the up-stream data optical signals, wherein the RN comprises a second wavelength division multiplexer/demultiplexer (WDM2) for spectrum-dividing the down-stream data optical signal or the broadcast optical signal and transmitting it to the plurality of optical network units (ONU 1,ONU 2,...,ONU N) and for multiplexing the up-stream data optical signals being transmitted from the plurality of optical network units (ONU 1,ONU 2,...,ONU N), and wherein the plurality of optical network units (ONU 1,ONU 2,...,ONU N) comprises: a plurality of second WDM filters, being connected to an output end of the second WDM2, for splitting the down-stream data optical signal or the broadcast optical signal and the down-stream data optical signals; a plurality of second optical receivers (Rx), being connected to the plurality of second WDM filters, respectively, for receiving the down-stream data optical signal or the broadcast optical signal; and a plurality of second optical transmitters (Tx), being connected to the plurality of second WDM filters, respectively, for outputting the up-stream data optical signals.

A transmission device of a low-noise optical signal for transmitting a down-stream data optical signal according to an eighth aspect of the present invention comprises a low-noise multi-wavelength light source (LMLS); a first wavelength division multiplexer/demultiplexer (WDM1), being connected to the LMLS, for spectrum-dividing an output light of the LMLS; a plurality of external modulators (EM), being connected to an output end of the first WDM1, for modulating spectrum-divided output lights into down-stream data optical signals; a plurality of WDM filters for splitting the down-stream data optical signals, which are modulated at the plurality of external modulators (EM), and up-stream data optical signals; a plurality of optical receivers (Rx), being connected to the plurality of WDM filers, for receiving the up-stream data optical signals; and a second wavelength division multiplexer/demultiplexer (WDM2), being connected to the plurality of WDM filers, for multiplexing the down-stream data optical signals.

A wavelength division multiplexed optical access network having a transmission device of a low-noise optical signal according to a ninth aspect of the present invention comprises a central office (CO); a remote node (RN); a plurality of optical network units (ONU 1,ONU 2,...,ONU N); a feeder fiber (FF) for connecting the CO and the RN; and a plurality of distribution fibers (DF) for connecting the RN and the plurality of optical network units (ONU 1,ONU 2,...,ONU N), wherein the CO comprises: a low-noise multi-wavelength light source (LMLS); a first wavelength division multiplexer/demultiplexer (WDM1), being connected to the LMLS, for spectrum-dividing an output light of the LMLS; a plurality of external modulators (EM), being connected to an output end of the first WDM1, for modulating spectrum-divided output lights into down-stream data optical signals; a plurality of first WDM filters for splitting the down-stream data optical signals, which are modulated at the plurality of external modulators (EM), and up-stream data optical signals; a plurality of first optical receivers (Rx), being connected to the plurality of first WDM filters, for receiving the up-stream data optical signals; and a second wavelength division multiplexer/demultiplexer (WDM2), being connected to the plurality of first WDM filters, for multiplexing the down-stream data optical signals, wherein the RN comprises a third wavelength division multiplexer/demultiplexer (WDM3) for demultiplexing the down-stream data optical signals and multiplexing the up-stream data optical signals, and wherein the plurality of optical network units (ONU 1,ONU 2,...,ONU N) comprises: a plurality of second WDM filters being connected to an output end of the third WDM3; and a plurality of second optical transceivers (TRx) being connected to the plurality of second WDM filters.

A wavelength division multiplexed optical transmission device according to a tenth aspect of the present invention comprises a transmitting end comprising a plurality of optical transmitters (Tx) and a first wavelength division multiplexer/demultiplexer (WDM1), being connected to the plurality of optical transmitters (Tx), for multiplexing data optical signals outputted from the plurality of optical transmitters (Tx); a receiving end comprising a plurality of optical receivers (Rx) and a second wavelength division multiplexer/demultiplexer (WDM2), being connected to the plurality of optical receivers (Rx), for demultiplexing the data optical signals multiplexed by the first WDM1; one or more optical fibers for connecting the transmitting end and the receiving end ; and an optical amplifier (OA) being provided on the one or more optical fibers and embodied by using a gain medium for a low-noise multi-wavelength light source.

A wavelength division multiplexed optical transmission device according to an eleventh aspect of the present invention comprises a transmitting end comprising a plurality of optical transmitters (Tx) and a first wavelength division multiplexer/demultiplexer (WDM1), being connected to the plurality of optical transmitters (Tx), for multiplexing data optical signals outputted from the plurality of optical transmitters (Tx); a receiving end comprising a plurality of optical receivers (Rx), a second wavelength division multiplexer/demultiplexer (WDM2), being connected to the plurality of optical receivers (Rx), for demultiplexing the data optical signals multiplexed by the first WDM1, a circulator (CIR) being connected to the second WDM2, and an optical amplifier (OA) being connected to the circulator (CIR) and embodied by using a gain medium for a low-noise multi-wavelength light source; and an optical fiber for connecting the transmitting end and the receiving end, wherein only one side is anti-reflection coated in the optical amplifier (OA) so that optical signals inputted into the optical amplifier (OA) are amplified and then are reflected and outputted again, and wherein the circulator (CIR) transmits the data optical signals to the optical amplifier (OA) and transmits the data optical signals amplified by the optical amplifier (OA) to the second WDM2.

### Advantageous Effect

According to the present invention, the following advantages are accomplished:

1. It is possible to generate a plurality of lights (i.e., multi-wavelength lights) which are lasing at different wavelengths one another by one light source when using an LMLS according to the present invention, and enhance economic efficiency when applying such multi-wavelength lights into an optical communications network and an optical access network.

2. While an applicable technical field is narrow because a transmission speed is limited due to an increase of noise at a time of spectrum division in a prior art multi-wavelength light source, an LMLS according to the present invention improves dramatically the prior art problems and thus is capable of accomplishing a high speed, enhancing a transmission characteristic, and accommodating broadcast signals, etc., effectively.

3. Because an LMLS according to the present invention may be applicable not only to an optical access network but also to a metro network, the present invention is possible to contribute to lowering costs and enhancement of an optical transmitting system. Herein, the term "enhancement" means that an LMLS may be applicable to a long-distance transmission and thus it is possible to combine a metro network and an optical access network so that the number of intermediate central offices may be reduced.

4. In case of using an optical amplifier using a gain medium for an LMLS according to the present invention, it is possible to reduce noises by amplifying wavelength division multiplexed optical signals, which are lasing at a multi-wavelength, simultaneously, unlike a prior art optical amplifier.

5. In case of using an LMLS according to the present invention, it is possible to accommodate a broadcast signal transmission device into an optical communications network, which is difficult to be embodied up to date, and thus to embody an efficient optical access network capable of transmitting a multicast signal and a communications signal simultaneously.

Further features and advantages of the present invention can be obviously understood with reference to the accompanying drawings where same or similar reference numerals indicate same components.

### Brief Description of the Drawings

Fig. 1 illustrates a schematic view of an optical transmission device of a general wavelength division multiplexed optical communications network.

Fig. 2 illustrates a schematic view of a cheap light source which is wavelength-locked by injected incoherent broadband light and a wavelength division multiplexed optical access network using the same, according to a prior art.

Fig. 3 illustrates a view of a low-noise broadband light source embodied through a mutual injection of F-P LD according to a prior art.

Fig. 4 illustrates a schematic view of a transmission device of a low-noise optical signal where a plurality of selected beams has a low-noise, respectively, even in case of selecting respectively different wavelengths from a plurality of plurality of lights beams being lasing at a multi-wavelength, by using a plurality of low-noise multi-wavelength light sources (LMLS) according to a first embodiment of the present invention.

Fig. 5 illustrates a view of a wavelength division multiplexed optical access network having a transmission device of a low-noise optical signal according to a first embodiment of the present invention as illustrated in Fig. 4.

Fig. 6 illustrates a schematic view for explaining a transmission device of a low-noise optical signal where a plurality of spectrum-divided lights has a low-noise, respectively, even in case of spectrum-dividing one light being lasing at a multi-wavelength, by using a low-noise multi-wavelength light source (LMLS) according to a second embodiment of the present invention.

Fig. 7 illustrates a schematic view of a transmission device of a low-noise optical signal where output lights outputted from a low-noise multi-wavelength light source (LMLS) from an LMLS according to a third embodiment of the present invention are spectrum-divided, while a plurality of spectrum-divided output lights is injected into a specific light source, respectively, of a plurality of optical transmitters (Tx).

Fig. 8 illustrates a schematic view of an embodiment of a wavelength division multiplexed optical access network having a transmission device of a low-noise optical signal according to a third embodiment of the present invention as illustrated in Fig. 7.

Fig. 9 illustrates a schematic view of a transmission device of a broadcast signal using a low-noise multi-wavelength light source according to a third embodiment of the present invention.

Fig. 10 illustrates a schematic view of a transmission device of a broadcast signal using a low-noise multi-wavelength light source according to a fourth embodiment of the present invention.

Figs. 11 and 12 respectively illustrate a view of a wavelength division multiplexed optical access network having a transmission device of a broadcast signal using a low-noise multi-wavelength light source of the present invention illustrated in Figs. 9 and 10.

Figs. 13 and 14 respectively illustrate a view of a wavelength division multiplexed optical access network for transmitting a down-stream data optical signal or a broadcast optical signal using one low-noise multi-wavelength light source (LMLS) according to the present invention.

Fig. 15 illustrates a schematic view of a transmission device of a low-noise optical signal for transmitting up-stream or down-stream data optical signals using one low-noise multi-wavelength light source (LMLS) which is lasing at a multi-wavelength according to the present invention.

Fig. 16 illustrates a view of one embodiment of a wavelength division multiplexed optical access network having a transmission device of a low-noise optical signal illustrated in Fig. 15.

Fig. 17 illustrates a view of a wavelength division multiplexed optical transmission device having an optical amplifier (OA) using a gain medium for a low-noise multi-wavelength light source (LMLS) according to one embodiment of the present invention.

Fig. 18 illustrates a view of a wavelength division multiplexed optical transmission device having an optical amplifier (OA) using a gain medium for a low-noise multi-wavelength light source (LMLS) according to another embodiment of the present invention.

### Mode for the Invention

Hereinafter, the present invention will be described in more detail with reference to the embodiments of the present invention and the appended drawings.

Fig. 4 illustrates a schematic view of a transmission device of a low-noise optical signal where a plurality of selected lights has a low-noise, respectively, even in case of selecting respectively different wavelengths from a plurality of plurality of lights being lasing at a multi-wavelength, by using a plurality of low-noise multi-wavelength light sources (LMLS) according to a first embodiment of the present invention. A plurality of low-noise multi-wavelength light sources (LMLS) illustrated in Fig. 4 may be embodied respectively by a light source having an inhomogeneous broadening feature.

Referring to Fig. 4, a transmission device of a low-noise optical signal according to a first embodiment of the present invention comprises a plurality of low-noise multi-wavelength light sources (LMLS) (422,423,...,424); and one wavelength division multiplexer/demultiplexer (WDM) (412) being connected to the plurality of LMLS (422,423,...,424), respectively. The WDM (412) has one input port and N-numbered output ports (N ≥ 1). The output lights of the plurality of LMLS (422,423,...,424) are respectively inputted into the output ports of the WDM (412) and then are spectrum-divided. Spectrum-divided optical signals (λ1,λ2,...,λN) are respectively multiplexed at the WDM (412) and are outputted through the input port. Herein, the spectrum-divided optical signals (λ1,λ2,...,λN) are respectively a low-noise optical signal.

Fig. 5 illustrates a view of a wavelength division multiplexed optical access network having a transmission device of a low-noise optical signal according to a first embodiment of the present invention as illustrated in Fig. 4.

Referring to Fig. 5, a wavelength division multiplexed optical access network having a transmission device of a low-noise optical signal according to a first embodiment of the present invention comprises a central office (CO), a remote node (RN), a plurality of optical network units (ONU 1,ONU 2,...,ONU N), a feeder fiber (FF) (411) for connecting the CO and the RN, and a plurality of distribution fibers (DF) (413,414,...,415). The CO comprises a first wavelength division multiplexer/demultiplexer (WDM1) (410); a plurality of first WDM filters (407,408,...,409), being connected to the first WDM1 (410), for splitting up-stream signals and down-stream signals; a plurality of first optical receivers (Rx) (404,405,...,406), being connected to the plurality of first WDM filters (407,408,...,409), respectively, for receiving the up-stream signals; and a plurality of first low-noise multi-wavelength light sources (LMLS) (401,402,...,403) being connected to the plurality of first WDM filters (407,408,...,409), respectively. The RN comprises a second wavelength division multiplexer/demultiplexer (WDM2) (412) for multiplexing the up-stream signals inputted from the plurality of optical network units (ONU 1,ONU 2,...,ONU N). The plurality of optical network units (ONU 1,ONU 2,...,ONU N) comprises a plurality of second WDM filters (416,417,...,418), being connected to an output end of the second WDM2 (412) of the RN, for splitting the up-stream signals and the down-stream signals; a plurality of second optical receivers (Rx) (419,420,...,421), being connected to the plurality of second WDM filters (416,417,...,418), respectively, for receiving the down-stream signals; and a plurality of second low-noise multi-wavelength light sources (LMLS) (422,423,...,424) being connected to the plurality of second Rx (419,420,...,421), respectively.

As described in detail above, in a wavelength division multiplexed optical access network according to the first embodiment of the present invention, the plurality of optical network units (ONU 1,ONU 2,...,ONU N), respectively, transmits output lights (the up-stream signals) of the plurality of second LMLS (422,423,...,424) in an up-stream direction through direct modulation or external modulation. The transmitted up-stream signals (specifically, up-stream data optical signals) are multiplexed by the second WDM2 (412) of the RN and then are transmitted to the CO through the feeder fiber (FF) (411). The multiplexed up-stream data optical signals are demultiplexed at the first WDM1 (410) of the CO and then are filtered by the plurality of first WDM filters (407,408,...,409). The filtered up-stream data optical signals are respectively received by the plurality of first optical receivers (Rx) (404,405,... ,406). In case of the down-stream signals, output lights (the down-stream signals) of the plurality of first LMLS (401,402,...,403) of the CO are modulated through direct modulation or external modulation and then are multiplexed by the first WDM1 (410). The multiplexed down-stream signals (specifically, downp-stream data optical signals) are transmitted to the RN through the feeder fiber (FF) (411). The multiplexed down-stream data optical signals are demultiplexed by the second WDM2 (412) of the RN and then are filtered by the plurality of second WDM filters (416,417,...,418). The filtered down-stream data optical signals are respectively received by the plurality of second optical receivers (Rx) (419,420,...,421).

In the embodiments of Figs. 4 and 5 as described in detail above, both the down-stream data optical signals and the up-stream data optical signals are formed as a low-noise optical signal, by using the plurality of first LMLS (401,402,...,403) and the plurality of second LMLS (422,423,...,424), respectively, as the light sources for the down-stream signals and the up-stream signals.

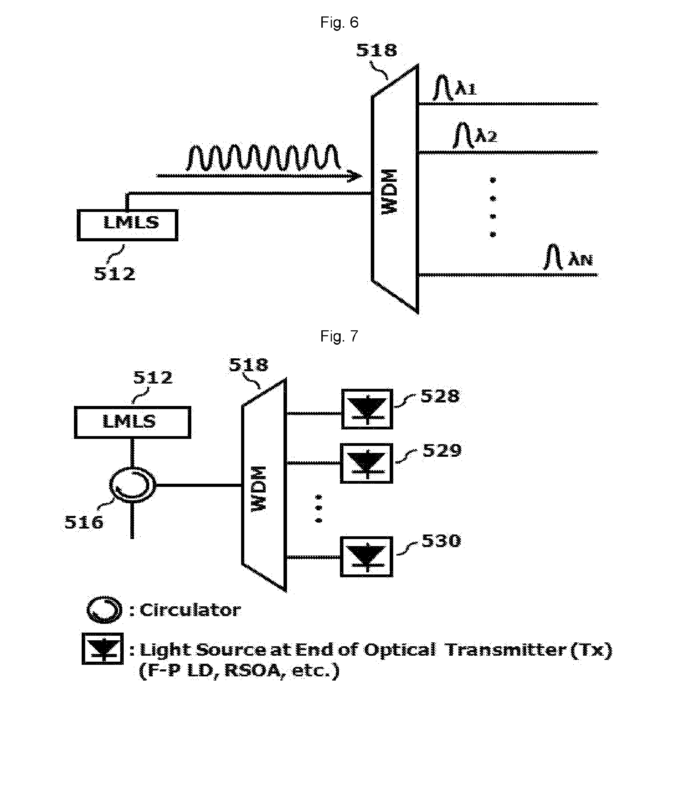

Fig. 6 illustrates a schematic view for explaining a transmission device of a low-noise optical signal where a plurality of spectrum-divided lights has a low-noise, respectively, even in case of spectrum-dividing one light being lasing at a multi-wavelength, by using a low-noise multi-wavelength light source (LMLS) according to a second embodiment of the present invention.

Referring to Fig. 6, a transmission device of a low-noise optical signal according to a second embodiment of the present invention comprises one low-noise multi-wavelength light sources (LMLS) (512); and one wavelength division multiplexer/demultiplexer (WDM) (518) which is connected to the one LMLS (512). The WDM (518) has one input port and N-numbered output ports (N ≥ 1). The output light of the LMLS (512) is inputted into the input port of the WDM (518) and then is spectrum-divided into N-numbered lights (λ1,λ2,...,λN). In this case, spectrum-divided N-numbered lights (λ1,λ2,...,λN) are respectively low-noise lights having narrow bands with different center wavelengths. Thus, the spectrum-divided N-numbered lights (λ1,λ2,...,λN) have a feature that noises such as a mode partition noise, etc. are not increased when compared with those before passing through the WDM (518). The spectrum-divided N-numbered lights) (λ1,λ2,...,λN) are respectively outputted through the N-numbered output ports of the WDM (518).

Fig. 7 illustrates a schematic view of a transmission device of a low-noise optical signal where output lights outputted from a low-noise multi-wavelength light source (LMLS) from an LMLS according to a third embodiment of the present invention are spectrum-divided, while a plurality of spectrum-divided output lights is injected into a specific light source, respectively, of a plurality of optical transmitters (Tx).

Referring to Fig. 7, a transmission device of a low-noise optical signal according to a third embodiment of the present invention comprises a low-noise multi-wavelength light source (LMLS) (512); a wavelength division multiplexer/demultiplexer (WDM) (518) having one input port, which an output light of the LMLS (512) is inputted into, and a plurality of output ports which passes only a desired wavelength band from the output light which is inputted into the input port; a plurality of light sources being provided within a plurality of optical transmitters (Tx) (528,529,...,530) which is connected to the WDM (518); and a circulator (CIR) (516) being connected between the LMLS (512) and the WDM (518). Herein, the plurality of light sources being provided within the plurality of optical transmitters (Tx) (528,529,...,530) is respectively embodied, for example, by an F-P LD, a reflective semiconductor optical amplifier (RSOA), etc.

Hereinafter, an operation principle of a transmission device of a low-noise optical signal according to a third embodiment of the present invention will be described in detail.

Referring back to Fig. 7, the output light of the LMLS (512) passes through the CIR (516) and then is inputted into the WDM (518). After that, the inputted light is divided per spectrum depending on the plurality of output ports of the WDM (518). A plurality of lights divided per spectrum by the WDM (518) is respectively low-noise lights having narrow bands with different center wavelengths. In such a plurality of lights divided per spectrum by the WDM (518), noises such as a mode partition noise, etc. are not increased when compared with those before passing through the WDM (518). The plurality of lights of narrow bands with different center wavelengths is respectively injected into the plurality of light sources of the plurality of optical transmitters (Tx) (528,529,...,530) which is connected to the plurality of output ports of the WDM (518). The plurality of light sources of the plurality of optical transmitters (Tx) (528,529,...,530), which the plurality of low-noise lights that is wavelength-divided is respectively injected into, outputs respectively wavelength-locked optical signals having the same wavelengths as those of the injected low-noise lights, i.e., wavelengths identical to the center wavelengths of pass bands of the WDM (518). The outputted wavelength-locked optical signals pass again the WDM (518) and are multiplexed, and then are outputted through the CIR (516).

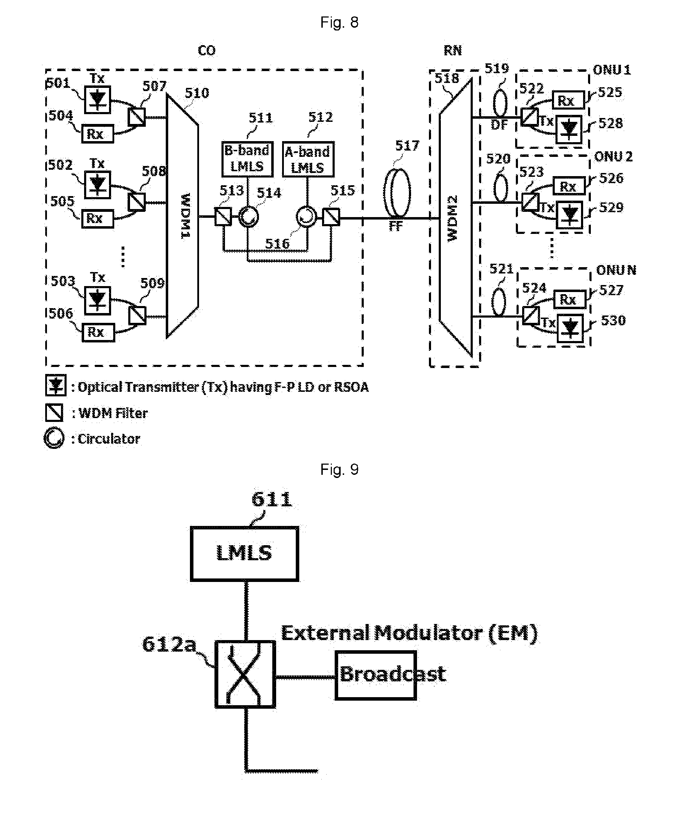

Fig. 8 illustrates a schematic view of an embodiment of a wavelength division multiplexed optical access network having a transmission device of a low-noise optical signal according to a third embodiment of the present invention as illustrated in Fig. 7.

Referring back to Fig. 8, a wavelength division multiplexed optical access network having a transmission device of a low-noise optical signal according to the present invention is the same as the wavelength division multiplexed optical access network illustrated in Fig. 2, except that low-noise multi-wavelength light sources (A-band LMLS (512) and B-band LMLS (511)) which are lasing at an A-band and a B-band are used instead of an A-BLS and a B-BLS. That is, a wavelength division multiplexed optical access network having a transmission device of a low-noise optical signal according to the present invention comprises a central office (CO); a remote node (RN) including a second wavelength division multiplexer/demultiplexer (WDM2) (518); a plurality of optical network units (ONU 1, ONU 2,..., ONU N); a feeder fiber (FF) (517) for connecting the CO and the RN; and a plurality of distribution fibers (DF) (519,520,...,521) for connecting the RN and the plurality of optical network units (ONU 1,ONU 2,...,ONU N). Herein, the CO comprises a plurality of first optical transceivers (TRx) comprising a plurality of first optical receivers (Rx) (504,505,...,506) and a plurality of first optical transmitters (Tx) (501,502,...,503) having respectively an F-P LD or a RSOA; a plurality of first WDM filters (507,508,..,509) being connected to the plurality of first optical transceivers (TRx); a first wavelength division multiplexer/demultiplexer (WDM1) (510) being connected to the plurality of first WDM filters (507,508,..,509); an A-band LMLS (512) being lasing at an A-band; a B-band LMLS (511) being lasing at a B-band; a first optical splitter, being connected to the B-band LMLS (511), for transmitting a first output light lased from the B-band LMLS (511) to the first WDM1 (510); and a second optical splitter, being connected to the A-band LMLS (512), for transmitting a second output light lased from the A-band LMLS (512) to the second WDM2 (518). Herein, the first optical splitter comprises a first circulator (CIR1) (514) being connected to the B-band LMLS (511), and a third WDM filter (513) being connected to the first CIR1 (514) and the first WDM1 (510), respectively. Further, the second optical splitter comprises a second circulator (CIR2) (516) being connected to the A-band LMLS (512) and the third WDM filter (513), respectively, and a fourth WDM filter (515) being connected to the first CIR1 (514), the second CIR2 (516), and the feeder fiber (FF) (517), respectively. The first and second optical splitters are respectively embodied by a 3dB 2x2 optical splitter, and the first WDM1 (510) and the second WDM2 (518) are respectively embodied by a tunable optical filer or a 1xN AWG. Further, the plurality of optical network units (ONU 1,ONU 2,...,ONU N) comprises a plurality of second optical transceivers (TRx) comprising a plurality of second optical receivers (Rx) (525,526,...,527) and a plurality of second optical transmitters (Tx) (528,529,...,530) having respectively an F-P LD or a RSOA; and a plurality of second WDM filters (522,523,..,524) being connected to the plurality of second optical transceivers (TRx). The plurality of second optical transceivers (TRx) is connected to the second WDM2 (518) by the plurality of distribution fibers (DF) (519,520,...,521). The second WDM2 (518) of the RN spectrum-divides a plurality of low-noise multi-wavelength lights which is down-stream data optical signals being transmitted from the CO, and multiplexes up-stream data optical signals being transmitted from the plurality of optical network units (ONU 1,ONU 2,...,ONU N).

Transmission of up-stream and down-stream data optical signals in a wavelength division multiplexed optical access network according to the present invention illustrated in Fig. 8 having a configuration as described above will be described in more detail hereinbelow.

Referring back to Fig. 8, the second output light of the A-band LMLS (512) of the CO is transmitted to the second WDM2 (518) within the RN by the second optical splitter (the second CIR2 (516) and the fourth WDM filter (515)). The transmitted second output light is spectrum-divided by the second WDM2 (518). The plurality of second output lights, which is spectrum-divided, is respectively low-noise lights having narrow bands with different center wavelengths. The spectrum-divided, plurality of second output lights is injected into the light sources of the plurality of second optical transmitters (Tx) (528,529,...,530) of the plurality of optical network units (ONU 1,ONU 2,...,ONU N). The light sources of the plurality of second optical transmitters (Tx) (528,529,...,530) is wavelength-locked by the spectrum-divided, plurality of second output lights, respectively. After that, the up-stream data optical signals outputted respectively by the light sources of the plurality of optical network units (ONU 1,ONU 2,...,ONU N) are multiplexed at the second WDM2 (518) of the RN and then are transmitted to the CO. The up-stream data optical signals transmitted to the CO are demultiplexed at the first WDM1 (510). The demultiplexed up-stream data optical signals are received by the plurality of first optical receivers (Rx) (504,505,...,506), respectively. In case of the down-stream data optical signals, the first output light of the B-band LMLS (511) of the CO is transmitted to the first WDM1 (510) by the first optical splitter (the first CIR1 (514) and the third WDM filter (513)) and then is spectrum-divided by the first WDM1 (510) within the CO. The spectrum-divided, plurality of first output lights is injected into the light sources of the plurality of first optical transmitters (Tx) (501,502,...,503). The spectrum-divided, plurality of first output lights is respectively low-noise lights having narrow bands with different center wavelength. The light sources of the plurality of first optical transmitters (Tx) (501,502,...,503) is wavelength-locked by the spectrum-divided, plurality of first output lights, respectively. After that, the down-stream data optical signals outputted respectively by the light sources of the plurality of first optical transmitters (Tx) (501,502,...,503) are multiplexed by the first WDM1 (510) and then are transmitted to the RN. The transmitted down-stream data optical signals are demultiplexed by the second WDM2 (518) within the RN. The demultiplexed down-stream data optical signals are received by the plurality of second optical receivers (Rx) (525,526,...,527), respectively, of the plurality of optical network units (ONU 1,ONU 2,...,ONU N).

Fig. 9 illustrates a schematic view of a transmission device of a broadcast signal using a low-noise multi-wavelength light source according to a third embodiment of the present invention.

Referring to Fig. 9, a transmission device of a broadcast signal using a low-noise multi-wavelength light source according to a third embodiment of the present invention comprises a low-noise multi-wavelength light source (LMLS) (611); and an external modulator (EM) (612a), being connected to the LMLS (611), for optical modulation of an output light of the LMLS (611) into a broadcast signal.

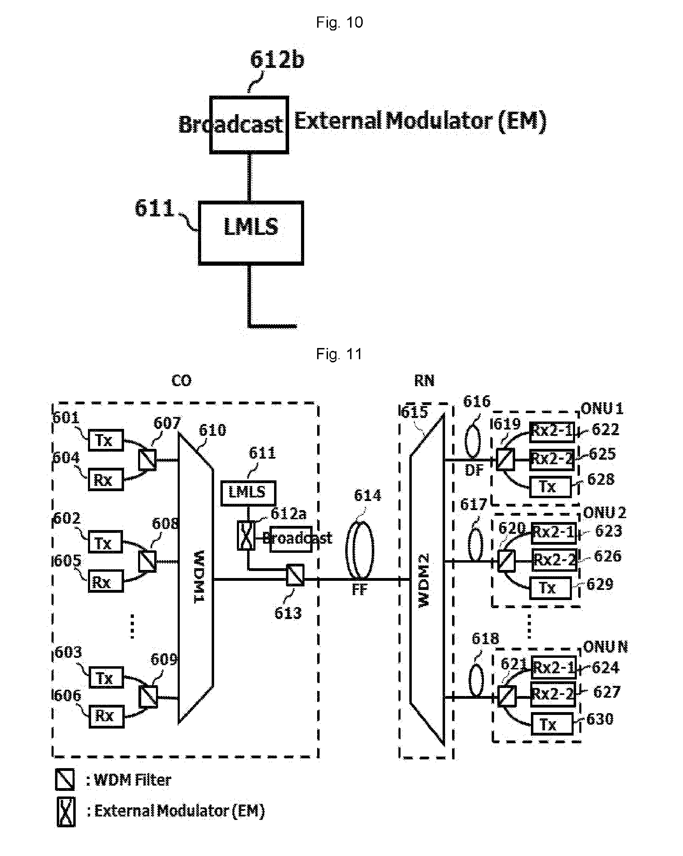

Fig. 10 illustrates a schematic view of a transmission device of a broadcast signal using a low-noise multi-wavelength light source according to a fourth embodiment of the present invention. A broadcast signal using a low-noise multi-wavelength light source according to a fourth embodiment of the present invention illustrated in Fig. 10 comprises a low-noise multi-wavelength light source (LMLS) (611); and a direct modulator (DM) (612b), being connected to the LMLS (611), for optical modulation of an output light of the LMLS (611) into a broadcast signal.

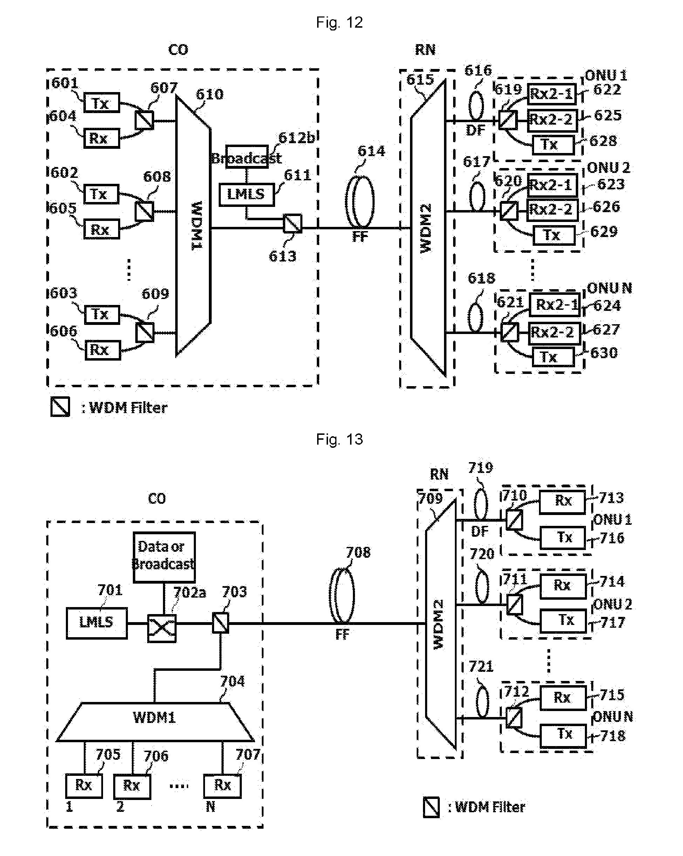

Figs. 11 and 12 respectively illustrate a view of a wavelength division multiplexed optical access network having a transmission device of a broadcast signal using a low-noise multi-wavelength light source of the present invention illustrated in Figs. 9 and 10. Wavelength division multiplexed optical access networks illustrated in Figs. 11 and 12, respectively, are substantially the same as the wavelength division multiplexed optical access network illustrated in Fig. 5, except a configuration of light sources being used within the CO, and a plurality of optical network units (ONU 1,ONU 2,...,ONU N) comprising a second optical transmitter (Tx2) and two second optical receivers (Rx2-1/Rx2-2), respectively.

First, referring to Fig. 11, a wavelength division multiplexed optical access network having a transmission device of a broadcast signal using a low-noise multi-wavelength light source comprises a central office (CO), a remote node (RN), a plurality of optical network units (ONU 1,ONU 2,...,ONU N), a feeder fiber (FF) (614) for connecting the CO and the RN, and a plurality of distribution fibers (DF) (616,617,...,618) for connecting the RN and the plurality of optical network units (ONU 1,ONU 2,...,ONU N). The CO comprises a low-noise multi-wavelength light source (LMLS) (611) being lasing at a band different from up-stream data optical signals and down-stream data signals, respectively; an external modulator (EM) (612a) for modulating an output light of the LMLS (611) into a broadcast signal; a WDM filter (613) for combining the down-stream data optical signals, which are multiplexed, and an optical signal which is modulated into the broadcast signal through the EM (612a); a first wavelength division multiplexer/demultiplexer (WDM1) (610) for wavelength division demultiplexing the up-stream data optical signals; a plurality of first WDM filters (607,608,..,609), being connected to the first WDM1 (610), for splitting the up-stream data optical signals and the down-stream data optical signals; a plurality of first optical receivers (Rx) (604,605,...,606), being connected to the plurality of first WDM filters (607,608,..,609), respectively, for receiving the up-stream data optical signals; and a plurality of first optical transmitters (Tx) (601,602,...,603), being connected to the plurality of first WDM filters (607,608,..,609), respectively, for outputting the down-stream data optical signals.

Further, the RN comprises a second wavelength division multiplexer/demultiplexer (WDM2) (615) for spectrum-dividing the down-stream data optical signals and transmitting them to the plurality of optical network units (ONU 1,ONU 2,...,ONU N) and for multiplexing the up-stream data optical signals being transmitted from the plurality of optical network units (ONU 1,ONU 2,...,ONU N). The plurality of optical network units (ONU 1,ONU 2,...,ONU N) comprises a plurality of second WDM filters (619,620,...,621), being connected to an output end of the second WDM2 (615), for splitting the up-stream data optical signals and the down-stream data optical signals; two pluralities of second optical receivers (Rx2-1/Rx2-2) (622,625;623,626;...;624,627), being connected to the plurality of second WDM filters (619,620,...,621), respectively, for receiving the down-stream data optical signals; and a plurality of second optical transmitters (Tx) (628,629,...,630), being connected to the plurality of second WDM filters (619,620,... ,621), respectively, for outputting the up-stream data optical signals.

The down-stream data optical signals transmitted from the first optical transmitters (Tx) (601,602,...,603) are multiplexed by the first WDM1 (610) of the CO. The multiplexed down-stream data optical signals are respectively combined with the broadcast signal by the WDM filter (613). In this case, the LMLS (611) being used for transmitting the broadcast signal is lasing at a band different from the light sources (i.e., the plurality of first optical transmitters (Tx) (6010,602,...,603) and the plurality of second optical transmitters (628,629,...,630) being used for transmitting the up-stream data optical signals and the down-stream data optical signals. The multiplexed down-stream data optical signals and the broadcast signal are demultiplexed at the second WDM2 (615) of the RN through the feeder fiber (FF) (614) and then are outputted. The demultiplexed down-stream data optical signals and the broadcast signal are transmitted to the plurality of second WDM filters (619,620,...,621) of the plurality of optical network units (ONU 1,ONU 2,...,ONU N) through the plurality of distribution fibers (DF) (616,617,...,618). The plurality of second WDM filters (619,620,...,621) splits the transmitted down-stream data optical signals and the broadcast signal. The split down-stream data optical signals are transmitted to the first optical receives (Rx2-1) (622,623,...,624), and the split broadcast signal is transmitted to the second optical receives (Rx2-2) (625,626,...,627). The up-stream data optical signals outputted from the plurality of second optical transmitters (Tx) (628,629,...,630) of the plurality of optical network units (ONU 1,ONU 2,...,ONU N) are multiplexed by the second WDM2 (615). The multiplexed up-stream data optical signals pass through the feeder fiber (614) and are demultiplexed by the first WDM1 (610) of the CO. The demultiplexed up-stream data optical signals are received by the plurality of first optical receivers (Rx) (604,605,...,606) through the plurality of first WDM filters (607,608,...,609) being connected to an output end of the first WDM1 (610).

Referring to Fig. 12, it is known that a wavelength division multiplexed optical access network having a transmission device of a broadcast signal using a low-noise multi-wavelength light source according to the present invention is completely the same as the wavelength division multiplexed optical access network illustrated in Fig. 11, except that the direct modulator (612b) is used instead of the external modulator (612a) illustrated in Fig. 11. Therefore, a description of a specific configuration and operations of the a wavelength division multiplexed optical access network having a transmission device of a broadcast signal using a low-noise multi-wavelength light source according to the present invention illustrated in Fig. 12 is omitted in the present specification.

Fig. 13 illustrates a view of a wavelength division multiplexed optical access network for transmitting a down-stream data optical signal or a broadcast optical signal using one low-noise multi-wavelength light source (LMLS) according to the present invention.

Referring to Fig. 13, a wavelength division multiplexed optical access network for transmitting a down-stream data optical signal or a broadcast optical signal using one low-noise multi-wavelength light source (LMLS) according to an embodiment of the present invention comprises a central office (CO), a remote node (RN), a plurality of optical network units (ONU 1,ONU 2,...,ONU N), a feeder fiber (FF) (614) for connecting the CO and the RN, and a plurality of distribution fibers (DF) (616,617,...,618) for connecting the RN and the plurality of optical network units (ONU 1,ONU 2,...,ONU N). The CO comprises a low-noise multi-wavelength light source (LMLS) (701); an external modulator (EM) (702a), being connected to the LMLS (701), for modulating an output light of the LMLS (701) into a down-stream data optical signal or a broadcast optical signal; a first WDM filter (703) for splitting the down-stream optical signal or the broadcast optical signal modulated at the EM (702a) and up-stream data optical signals; a first wavelength division multiplexer/demultiplexer (WDM1) (704), being connected to the first WDM filter (703), for wavelength division demultiplexing the up-stream data optical signals; and a plurality of optical receivers (Rx) (705,706,...,707), being connected to the first WDM1 (704), for receiving the up-stream data optical signals.

Further, the RN comprises a second wavelength division multiplexer/demultiplexer (WDM2) (709) for spectrum-dividing the down-stream data optical signal or the broadcast optical signal and transmitting it to the plurality of optical network units (ONU 1,ONU 2,...,ONU N) and for multiplexing the up-stream data optical signals being transmitted from the plurality of optical network units (ONU 1,ONU 2,...,ONU N). The plurality of optical network units (ONU 1,ONU 2,...,ONU N) comprises a plurality of second WDM filters (710,711,...,712), being connected to an output end of the second WDM2 (709), for splitting the down-stream data optical signal or the broadcast optical signal and the up-stream data optical signals; a plurality of second optical receivers (Rx) (713,714,...,715), being connected to the plurality of second WDM filters (710,711,...,712), respectively, for receiving the down-stream data optical signal or the broadcast optical signal; and a plurality of second optical transmitters (Tx) (716,717,...,718), being connected to the plurality of second WDM filters (710,711,...,712), respectively, for outputting the up-stream data optical signals.

The output light of the LMLS (701), which is modulated into the down-stream data optical signal or the broadcast optical signal, passes through the first WDM filter (703) and then is inputted into the second WDM2 (709) of the RN through the feeder fiber (FF) (708). The inputted down-stream data optical signal or the broadcast optical signal is spectrum-divided at the second WDM2 (709) and passes through the distribution fibers (DF) (719,720,...,721), and then is transmitted to the plurality of second optical receivers (Rx) (713,714,...,715) by the second WDM filters (710,711,...,712) of the plurality of optical network units (ONU 1,ONU 2,...,ONU N). The up-stream data optical signals outputted from the plurality of second optical transmitters (Tx) (716,717,...,718) of the plurality of optical network units (ONU 1,ONU 2,...,ONU N) are multiplexed by the second WDM2 (710,711,...,712). The multiplexed up-stream data optical signals pass through the feeder fiber (FF) (708) and are split from the down-stream data optical signal or the broadcast optical signal by the first WDM filter (703) of the CO, and then are demultiplexed by the first WDM1 (704) and are inputted into the plurality of optical receivers (Rx) (705,706,...,707).

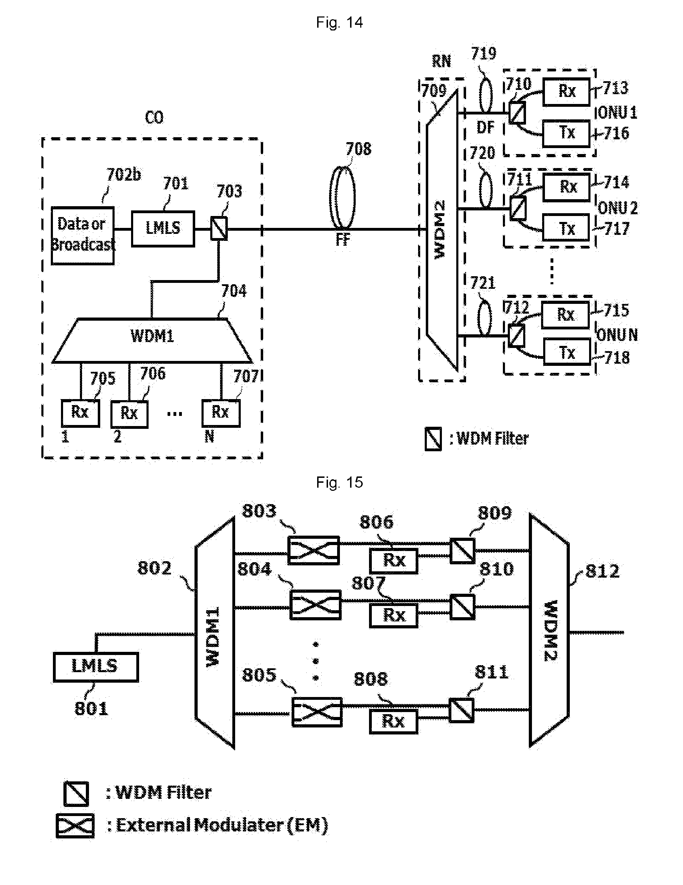

Referring to Fig. 14, it is known that a wavelength division multiplexed optical access network for transmitting a down-stream data optical signal or a broadcast signal using one low-noise multi-wavelength light source (LMLS) according to the present invention is completely the same as the wavelength division multiplexed optical access network illustrated in Fig. 13, except that the direct modulator (702b) is used instead of the external modulator (702a) illustrated in Fig. 13. Therefore, a description of a specific configuration and operations of the a wavelength division multiplexed optical access network for transmitting a down-stream data optical signal or a broadcast signal using one LMLS according to the present invention illustrated in Fig. 14 is omitted in the present specification.

In the embodiments illustrated in Figs. 13 and 14, a low-noise multi-wavelength light source (LMLS) instead of a plurality of second optical transmitters (Tx) (716,717,...,718) may be used for transmitting a up-stream data optical signal, as illustrated in Fig. 5.

Fig. 15 illustrates a schematic view of a transmission device of a low-noise optical signal for transmitting up-stream or down-stream data optical signals using one low-noise multi-wavelength light source (LMLS) which is lasing at a multi-wavelength according to the present invention.

Referring to Fig. 15, a transmission device of a low-noise optical signal for transmitting up-stream or down-stream data optical signals using one low-noise multi-wavelength light source (LMLS) comprises a low-noise multi-wavelength light source (LMLS) (801); a first wavelength division multiplexer/demultiplexer (WDM1) (802), being connected to the LMLS (801), for spectrum-dividing an output light of the LMLS (801); a plurality of external modulators (EM) (803,804,...,805), being connected to an output end of the first WDM1 (802), for modulating spectrum-divided output lights into down-stream data optical signals; a plurality of WDM filters (809,810,...,811) for splitting the down-stream data optical signals, which are modulated at the plurality of external modulators (EM) (803,804,...,805), and up-stream data optical signals; a plurality of optical receivers (Rx) (806,807,...,808), being connected to the plurality of WDM filters (809,810,...,811), for receiving the up-stream data optical signals; and a second wavelength division multiplexer/demultiplexer (WDM2) (812), being connected to the plurality of WDM filters (809,810,...,811), for multiplexing the down-stream data optical signals.

Referring back to Fig. 15, the output light of the LMLS (801) is spectrum-divided by the first WDM1 (802). The spectrum-divided lights are respectively low-noise lights having narrow bands with different center wavelengths. The spectrum-divided lights are modulated into the down-stream data optical signals by the plurality of external modulators (EM) (803,804,...,805). The modulated down-stream data optical signals pass through the plurality of WDM filters (809,810,...,811), and then are multiplexed at the second WDM2 (812) and are transmitted. Further, the up-stream data optical signals are demultiplxed by the second WDM2 (812). The demultiplexed up-stream data optical signals pass through the plurality of WDM filters (809,810,...,811), respectively, and then are received by the plurality of optical receivers (Rx) (806,807,...,808).

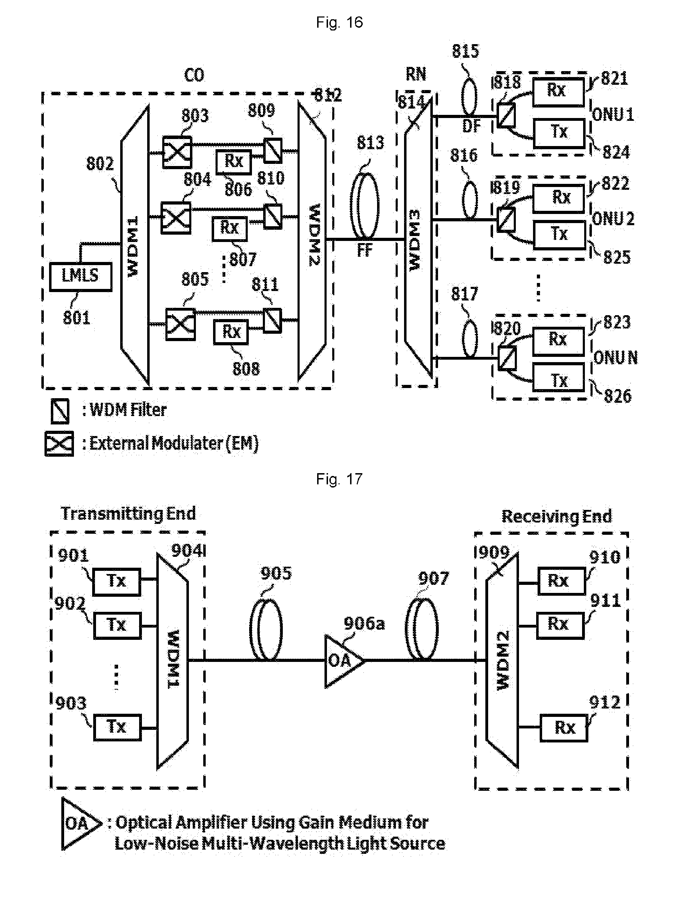

Fig. 16 illustrates a view of one embodiment of a wavelength division multiplexed optical access network having a transmission device of a low-noise optical signal illustrated in Fig. 15.

Referring to Fig. 16, a wavelength division multiplexed optical access network having a transmission device of a low-noise optical signal according to one embodiment of the present invention comprises a central office (CO), a remote node (RN), a plurality of optical network units (ONU 1,ONU 2,...,ONU N), a feeder fiber (FF) (813) for connecting the CO and the RN, and a plurality of distribution fibers (DF) (815,816,...,817) for connecting the RN and the plurality of optical network units (ONU 1,ONU 2,...,ONU N). Herein, the CO comprises a low-noise multi-wavelength light source (LMLS) (801); a first wavelength division multiplexer/demultiplexer (WDM1) (802), being connected to the LMLS (801), for spectrum-dividing an output light of the LMLS (801); a plurality of external modulators (EM) (803,804,...,805), being connected to an output end of the first WDM1 (802), for modulating spectrum-divided output lights into down-stream data optical signals; a plurality of first WDM filters (809,810,...,811) for splitting the down-stream data optical signals, which are modulated at the plurality of external modulators (EM) (803,804,...,805), and up-stream data optical signals; a plurality of first optical receivers (Rx) (806,807,...,808), being connected to the plurality of first WDM filters (809,810,...,811), for receiving the up-stream data optical signals; and a second wavelength division multiplexer/demultiplexer (WDM2) (812), being connected to the plurality of first WDM filters (809,810,...,811), for multiplexing the down-stream data optical signals.

Further, the RN comprises a third wavelength division multiplexer/demultiplexer (WDM3) (814) for demultiplexing the down-stream data optical signals and multiplexing the up-stream data optical signals. Moreover, the plurality of optical network units (ONU 1,ONU 2,...,ONU N) comprises a plurality of second WDM filters (818,819,...,820) being connected to an output end of the third WDM3 (814); and a plurality of second optical transceivers (TRx) being connected to the plurality of second WDM filters (818,819,...,820). The plurality of second optical transceivers (TRx) comprises a plurality of second optical receivers (Rx) (821,822,...,823) and a plurality of second optical transmitters (Tx) (824,825,...,826).

Hereinafter, a configuration and operations of a transmission device of a low-noise optical signal and a wavelength division multiplexed optical access network having the same, respectively illustrated in Figs. 15 and 16, will be described in more detail hereinbelow.

First, the output light of the LMLS (801) of the CO is spectrum-divided by the first WDM1 (802). The spectrum-divided low-noise output lights are respectively modulated by the plurality of external modulators (EM) (803,804,...,805). The modulated down-stream data optical signals pass through the feeder fiber (FF) (813) and are demultiplexed at the third WDM3 (814) of the RN. The demultiplexed down-stream data optical signals pass through the plurality of second WDM filters (818,819,...,820) of the plurality of optical network units (ONU 1,ONU 2,...,ONU N) and are transmitted to the plurality of second optical receivers (Rx) (821,822,...,823). Meanwhile, the up-stream data optical signals respectively outputted from the second optical transmitters (Tx) (824,825,...,826) of the plurality of optical network units (ONU 1,ONU 2,...,ONU N) pass through the plurality of second WDM filters (818,819,...,820) and are multiplexed by the third WDM3 (814) of the RN. After that, the multiplexed up-stream data optical signals pass through the feeder fiber (FF) (813) and are inputted into the second WDM2 (812) of the CO. The inputted up-stream data optical signals are demultiplexed by the second WDM2 (812), and then pass through the plurality of first WDM filters (809,810,...,811) and are received by the plurality of first optical receivers (Rx) (806,807,...,808).

Fig. 17 illustrates a view of a wavelength division multiplexed optical transmission device having an optical amplifier (OA) using a gain medium for a low-noise multi-wavelength light source (LMLS) according to one embodiment of the present invention.

More specifically, a wavelength division multiplexed optical transmission device according to one embodiment of the present invention illustrated in Fig. 17 comprises a transmitting end comprising a plurality of optical transmitters (Tx) (901,902,...,903) and a first wavelength division multiplexer/demultiplexer (WDM1) (904), being connected to the plurality of optical transmitters (Tx) (901,902,...,903), for multiplexing data optical signals outputted from the plurality of optical transmitters (Tx) (901,902,...,903); a receiving end comprising a plurality of optical receivers (Rx) (910,911,...,912) and a second wavelength division multiplexer/demultiplexer (WDM2) (909), being connected to the plurality of optical receivers (Rx) (910,911,...,912), for demultiplexing the data optical signals multiplexed by the first WDM1 (904); one or more optical fibers (905,907) for connecting the transmitting end and the receiving end; and an optical amplifier (OA) (906a) being provided on the one or more optical fibers (905,907) and embodied by using a gain medium for a low-noise multi-wavelength light source.

Referring back to Fig. 17, the plurality of data optical signals outputted from the plurality of optical transmitters (Tx) (901,902,...,903) of the transmitting end is multiplexed by the first WDM1 (904) and then is transmitted through the optical fiber (905). After that, the multiplexed data optical signals are amplified at the OA (906a) using a gain medium for a low-noise multi-wavelength light source. The amplified data optical signals are transmitted to the receiving end through the optical fiber (907). After that, the amplified data optical signals, which are transmitted to the receiving end, are demultiplexed by the second WDM2 (909) and are received by the plurality of the optical receivers (Rx) 910,911,...,912).

In case of using the OA (906a) which uses a gain medium for an LMLS according to one embodiment of the present invention illustrated in Fig. 17 as described above, it is possible to amplify wavelength division multiplexed optical signals, being lasing at a multi-wavelength, simultaneously and reduce noises.

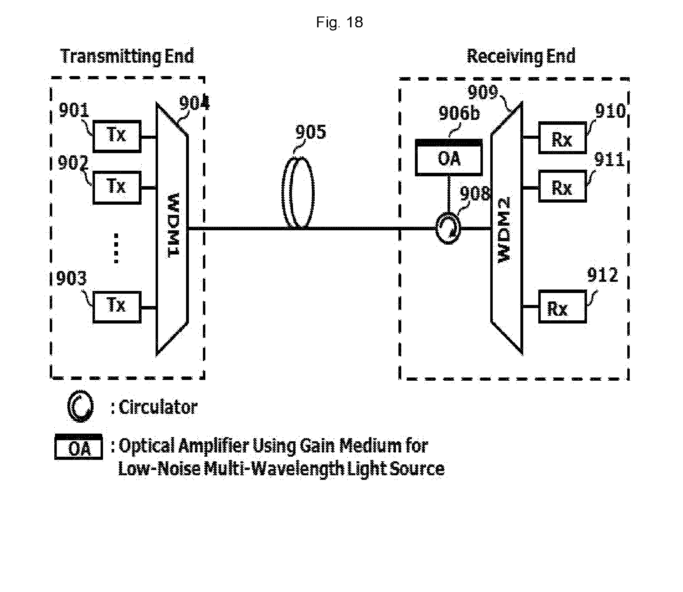

Fig. 18 illustrates a view of a wavelength division multiplexed optical transmission device having an optical amplifier (OA) using a gain medium for a low-noise multi-wavelength light source (LMLS) according to another embodiment of the present invention.

More specifically, a wavelength division multiplexed optical transmission device according to another embodiment of the present invention illustrated in Fig. 18 comprises a transmitting end comprising a plurality of optical transmitters (Tx) (901,902,...,903) and a first wavelength division multiplexer/demultiplexer (WDM1) (904), being connected to the plurality of optical transmitters (Tx) (901,902,...,903), for multiplexing data optical signals outputted from the plurality of optical transmitters (Tx) (901,902,...,903); a receiving end comprising a plurality of optical receivers (Rx) (910,911,...,912), a second wavelength division multiplexer/demultiplexer (WDM2) (909), being connected to the plurality of optical receivers (Rx) (910,911,...,912), for demultiplexing the data optical signals multiplexed by the first WDM1 (904), a circulator (CIR) (908) being connected to the second WDM2 (909), and an optical amplifier (OA) (906b) being connected to the circulator (CIR) (908) and embodied by using a gain medium for a low-noise multi-wavelength light source; and an optical fiber (905) for connecting the transmitting end and the receiving end. Herein, only one side of the OA (906b) is anti-reflection coated. Thus, the OA (906b) is configured that after the inputted data optical signals are amplified, they are reflected and outputted again. Further, the circulator (CIR) (908) transmits the data optical signals to the OA (906b) and transmits the data optical signals amplified by the OA (906b) to the second WDM2 (909).

Referring back to Fig. 18, the plurality of data optical signals outputted from the plurality of optical transmitters (Tx) (901,902,...,903) is multiplexed by the first WDM1 (904) and then is transmitted through the optical fiber (905). After that, the multiplexed data optical signals pass through the circulator (CIR) (908) and then are inputted into the OA (906b). The inputted data optical signals are amplified by the OA (906b) and then are reflected. The amplified data optical signals reflected and outputted from the OA (906b) pass again through the circulator (CIR) (908) and then are inputted into the second WDM2 (909). The amplified and inputted data optical signals are demultiplexed by the second WDM2 (909) and are received by the plurality of the optical receivers (Rx) 910,911,...,912).

In case of using the OA (906b) which uses a gain medium for an LMLS according to an embodiment of the present invention illustrated in Fig. 18 as described above, it is possible to amplify wavelength division multiplexed optical signals, being lasing at a multi-wavelength, simultaneously and reduce noises, likewise in Fig. 17.

### Industrial Applicability

A wavelength division multiplexed optical access network according to the embodiments of the present invention as described in detail above is conceptionally included in a wavelength division multiplexed optical communications network.

More specifically, it may be considered that one side of an optical transmitting and receiving end of a wavelength division multiplexed optical communications network corresponds to a central office (CO) of a wavelength division multiplexed optical access network, and the other side of the optical transmitting and receiving end of a wavelength division multiplexed optical communications network corresponds to a remote node (RN) and a plurality of optical network units (ONU) of a wavelength division multiplexed optical access network. In this case, a wavelength division multiplexed optical communications network does not include distribution fibers (DF) of a wavelength division multiplexed optical access network. Therefore, although the present invention illustratively describes a wavelength division multiplexed optical access network, any skilled person in the art may fully understand that the present invention may be applied to a wavelength division multiplexed optical communications network.

As various modifications could be made in the constructions and method herein described and illustrated without departing from the scope of the present invention, it is intended that all matter contained in the foregoing description or shown in the accompanying drawings shall be interpreted as illustrative rather than limiting. Thus, the breadth and scope of the present invention should not be limited by any of the above-described exemplary embodiments, but should be defined only in accordance with the following claims appended hereto and their equivalents.

## Claims

1. A transmission device of a low-noise optical signal comprising:
a plurality of low-noise multi-wavelength light sources (LMLS); and
one wavelength division multiplexer/demultiplexer (WDM) being connected to the plurality of LMLS, respectively, and having one input port and N-numbered output ports (N ≥ 1),
wherein output lights of the plurality of LMLS are respectively inputted into the output ports of the WDM and then are spectrum-divided, and
wherein the spectrum-divided optical signals are respectively multiplexed at the WDM and outputted through the input port.

2. The transmission device of a low-noise optical signal of claim 1,
wherein the output lights of the plurality of LMLS are respectively lasing at a broad wavelength band, and the spectrum-divided optical signals have a feature that noises are not greatly increased when compared with those before spectrum-dividing.

3. A wavelength division multiplexed optical access network having a transmission device of a low-noise optical signal comprising:
a central office (CO);
a remote node (RN);
a plurality of optical network units (ONU 1,ONU 2,...,ONU N);
a feeder fiber (FF) for connecting the CO and the RN; and
a plurality of distribution fibers (DF),
wherein the CO comprises:
a first wavelength division multiplexer/demultiplexer (WDM1);
a plurality of first WDM filters, being connected to the first WDM1, for splitting up-stream signals and down-stream signals;
a plurality of first optical receivers (Rx), being connected to the plurality of first WDM filters, respectively, for receiving the up-stream signals; and
a plurality of first low-noise multi-wavelength light sources (LMLS) being connected to the plurality of first WDM filters, respectively,
wherein the RN comprises a second wavelength division multiplexer/demultiplexer (WDM2) for multiplexing the up-stream signals inputted from the plurality of optical network units (ONU 1,ONU 2,...,ONU N), and
wherein the plurality of optical network units (ONU 1,ONU 2,...,ONU N) comprises:
a plurality of second WDM filters, being connected to an output end of the second WDM2 of the RN, for splitting the up-stream signals and the down-stream signals;
a plurality of second optical receivers (Rx), being connected to the plurality of second WDM filters, respectively, for receiving the down-stream signals; and
a plurality of second low-noise multi-wavelength light sources (LMLS) being connected to the plurality of second optical receivers (Rx), respectively.

4. The wavelength division multiplexed optical access network having a transmission device of a low-noise optical signal of claim 3,
wherein the down-stream signals outputted from the plurality of first LMLS are transmitted in a down-stream direction through direct modulation or external modulation, and
wherein the up-stream signals outputted from the plurality of second LMLS are transmitted in an up-stream direction through direct modulation or external modulation

5. The wavelength division multiplexed optical access network having a transmission device of a low-noise optical signal of claim 3 or 4,
wherein the down-stream signals outputted from the plurality of first LMLS are respectively lasing at a broad wavelength band, and the down-stream signals which are spectrum-divided by the first WDM1 have a feature that noises are not greatly increased when compared with those before spectrum-dividing, and
wherein the up-stream signals outputted from the plurality of second LMLS are respectively lasing at a broad wavelength band, and the up-stream signals which are spectrum-divided by the second WDM2 have a feature that noises are not greatly increased when compared with those before spectrum-dividing.

6. A transmission device of a low-noise optical signal comprising:
one low-noise multi-wavelength light sources (LMLS); and
one wavelength division multiplexer/demultiplexer (WDM) being is connected to the one LMLS and having one input port and N-numbered output ports (N ≥ 1),
wherein an output light of the LMLS is inputted into the input port of the WDM and then is spectrum-divided into N-numbered lights (λ1,λ2,...,λN), and
wherein the spectrum-divided N-numbered lights (λ1,λ2,...,λN) are respectively low-noise lights having narrow bands with different center wavelengths.

7. A transmission device of a low-noise optical signal comprising:
a low-noise multi-wavelength light source (LMLS);
a wavelength division multiplexer/demultiplexer (WDM) having one input port, which an output light of the LMLS is inputted into, and a plurality of output ports which passes only a desired wavelength band from the output light which is inputted into the one input port;
a plurality of light sources being provided within a plurality of optical transmitters (Tx) which is connected to the WDM; and
a circulator (CIR) being connected between the LMLS and the WDM,
wherein the output light of the LMLS is spectrum-divided into a plurality of lights by the WDM, and
wherein the spectrum-divided, plurality of lights is injected into the plurality of light sources.

8. The transmission device of a low-noise optical signal of claim 7, wherein the plurality of light sources is respectively embodied by a Fabry-Perot Laser Diode (F-P LD) or a reflective semiconductor optical amplifier (RSOA).

9. A wavelength division multiplexed optical access network having a transmission device of a low-noise optical signal comprising:
a central office (CO);
a remote node (RN) including a second wavelength division multiplexer/demultiplexer (WDM2);
a plurality of optical network units (ONU 1, ONU 2,..., ONU N);
a feeder fiber (FF) for connecting the CO and the RN; and
a plurality of distribution fibers (DF) for connecting the RN and the plurality of optical network units (ONU 1,ONU 2,...,ONU N),
wherein the CO comprises:
a plurality of first optical transceivers (TRx) comprising a plurality of first optical receivers (Rx) and a plurality of first optical transmitters (Tx);
a plurality of first WDM filters being connected to the plurality of first optical transceivers (TRx);
a first wavelength division multiplexer/demultiplexer (WDM1) being connected to the plurality of first WDM filters;
an A-band LMLS being lasing at an A-band;
a B-band LMLS being lasing at a B-band;
a first optical splitter, being connected to the B-band LMLS, for transmitting a first output light lased from the B-band LMLS to the first WDM1; and
a second optical splitter, being connected to the A-band LMLS, for transmitting a second output light lased from the A-band LMLS to the second WDM2,
wherein the first optical splitter comprises a first circulator (CIR1) being connected to the B-band LMLS, and a third WDM filter being connected to the first CIR1 and the first WDM1, respectively,
wherein the second optical splitter comprises a second circulator (CIR2) being connected to the A-band LMLS and the third WDM filter, respectively, and a fourth WDM filter being connected to the first CIR1, the second CIR2, and the feeder fiber (FF), respectively, and
wherein the plurality of optical network units (ONU 1,ONU 2,...,ONU N) comprises:
a plurality of second optical transceivers (TRx) comprising a plurality of second optical receivers (Rx) and a plurality of second optical transmitters (Tx); and
a plurality of second WDM filters being connected to the plurality of second optical transceivers (TRx).

10. The wavelength division multiplexed optical access network having a transmission device of a low-noise optical signal of claim 9,
wherein the plurality of first optical transmitters (Tx) and the plurality of second optical transmitters (Tx) respectively have a Fabry-Perot Laser Diode (F-P LD) or a reflective semiconductor optical amplifier (RSOA),
wherein the first and second optical splitters are respectively embodied by a 3dB 2x2 optical splitter, and
wherein the first WDM1 and the second WDM2 are respectively embodied by a tunable filter or a 1xN arrayed waveguide grating (AWG).

11. A transmission device of a broadcast signal using a low-noise multi-wavelength light source comprising:
a low-noise multi-wavelength light source (LMLS); and
an external modulator (EM) or a direct modulator (DM), being connected to the LMLS, for optical modulation of an output light of the LMLS into a broadcast signal.

12. A wavelength division multiplexed optical access network having a transmission device of a broadcast signal using a low-noise multi-wavelength light source comprising:
a central office (CO);
a remote node (RN);
a plurality of optical network units (ONU 1,ONU 2,...,ONU N);
a feeder fiber (FF) for connecting the CO and the RN; and
a plurality of distribution fibers (DF) for connecting the RN and the plurality of optical network units (ONU 1,ONU 2,...,ONU N),
wherein the CO comprises:
a low-noise multi-wavelength light source (LMLS) being lasing at a band different from up-stream data optical signals and down-stream data signals, respectively;
an external modulator (EM) or a direct modulator (DM) for modulating an output light of the LMLS into a broadcast signal;
a WDM filter for combining the down-stream data optical signals, which are multiplexed, and an optical signal which is modulated into the broadcast signal through the EM or the DM;
a first wavelength division multiplexer/demultiplexer (WDM1) for wavelength division demultiplexing the up-stream data optical signals;
a plurality of first WDM filters, being connected to the first WDM1, for splitting the up-stream data optical signals and the down-stream data optical signals;
a plurality of first optical receivers (Rx), being connected to the plurality of first WDM filters, respectively, for receiving the up-stream data optical signals; and
a plurality of first optical transmitters (Tx), being connected to the plurality of first WDM filters, respectively, for outputting the down-stream data optical signals, wherein the RN comprises a second wavelength division multiplexer/demultiplexer (WDM2) for spectrum-dividing the down-stream data optical signals and transmitting them to the plurality of optical network units (ONU 1,ONU 2,...,ONU N) and for multiplexing the up-stream data optical signals being transmitted from the plurality of optical network units (ONU 1,ONU 2,...,ONU N), and
wherein the plurality of optical network units (ONU 1,ONU 2,...,ONU N) comprises;
a plurality of second WDM filters, being connected to an output end of the second WDM2, for splitting the up-stream data optical signals and the down-stream data optical signals;
two pluralities of second optical receivers (Rx2-1/Rx2-2), being connected to the plurality of second WDM filters, respectively, for receiving the down-stream data optical signals; and
a plurality of second optical transmitters (Tx), being connected to the plurality of second WDM filters, respectively, for outputting the up-stream data optical signals.

13. A wavelength division multiplexed optical access network for transmitting a down-stream data optical signal or a broadcast optical signal using one low-noise multi-wavelength light source comprising:
a central office (CO);
a remote node (RN);
a plurality of optical network units (ONU 1,ONU 2,...,ONU N);
a feeder fiber (FF) for connecting the CO and the RN; and
a plurality of distribution fibers (DF) for connecting the RN and the plurality of optical network units (ONU 1,ONU 2,...,ONU N),
wherein the CO comprises:
a low-noise multi-wavelength light source (LMLS);
an external modulator (EM) or a direct modulator (DM), being connected to the LMLS, for modulating an output light of the LMLS into a down-stream data optical signal or a broadcast optical signal;
a first WDM filter for splitting the down-stream optical signal or the broadcast optical signal modulated through the EM or the DM and up-stream data optical signals;
a first wavelength division multiplexer/demultiplexer (WDM1), being connected to the first WDM filter, for wavelength division demultiplexing the up-stream data optical signals; and
a plurality of optical receivers (Rx), being connected to the first WDM1, for receiving the up-stream data optical signals,
wherein the RN comprises a second wavelength division multiplexer/demultiplexer (WDM2) for spectrum-dividing the down-stream data optical signal or the broadcast optical signal and transmitting it to the plurality of optical network units (ONU 1,ONU 2,...,ONU N) and for multiplexing the up-stream data optical signals being transmitted from the plurality of optical network units (ONU 1,ONU 2,...,ONU N), and
wherein the plurality of optical network units (ONU 1,ONU 2,...,ONU N) comprises:
a plurality of second WDM filters, being connected to an output end of the second WDM2, for splitting the down-stream data optical signal or the broadcast optical signal and the down-stream data optical signals;
a plurality of second optical receivers (Rx), being connected to the plurality of second WDM filters, respectively, for receiving the down-stream data optical signal or the broadcast optical signal; and
a plurality of second optical transmitters (Tx), being connected to the plurality of second WDM filters, respectively, for outputting the up-stream data optical signals.

14. A transmission device of a low-noise optical signal for transmitting up-stream or down-stream data optical signals comprising:
a low-noise multi-wavelength light source (LMLS);
a first wavelength division multiplexer/demultiplexer (WDM1), being connected to the LMLS, for spectrum-dividing an output light of the LMLS;
a plurality of external modulators (EM), being connected to an output end of the first WDM1, for modulating spectrum-divided output lights into down-stream data optical signals;
a plurality of WDM filters for splitting the down-stream data optical signals, which are modulated at the plurality of external modulators (EM), and up-stream data optical signals;
a plurality of optical receivers (Rx), being connected to the plurality of WDM filers, for receiving the up-stream data optical signals; and
a second wavelength division multiplexer/demultiplexer (WDM2), being connected to the plurality of WDM filers, for multiplexing the down-stream data optical signals.

15. The transmission device of a low-noise optical signal for transmitting up-stream or down-stream data optical signals of claim 14, wherein the spectrum-divided lights are respectively low-noise lights having narrow bands with different center wavelengths.

16. A wavelength division multiplexed optical access network having a transmission device of a low-noise optical signal comprising:
a central office (CO);
a remote node (RN);
a plurality of optical network units (ONU 1,ONU 2,...,ONU N);
a feeder fiber (FF) for connecting the CO and the RN; and
a plurality of distribution fibers (DF) for connecting the RN and the plurality of optical network units (ONU 1,ONU 2,...,ONU N),
wherein the CO comprises:
a low-noise multi-wavelength light source (LMLS);
a first wavelength division multiplexer/demultiplexer (WDM1), being connected to the LMLS, for spectrum-dividing an output light of the LMLS;
a plurality of external modulators (EM), being connected to an output end of the first WDM1, for modulating spectrum-divided output lights into down-stream data optical signals;
a plurality of first WDM filters for splitting the down-stream data optical signals, which are modulated at the plurality of external modulators (EM), and up-stream data optical signals;
a plurality of first optical receivers (Rx), being connected to the plurality of first WDM filters, for receiving the up-stream data optical signals; and
a second wavelength division multiplexer/demultiplexer (WDM2), being connected to the plurality of first WDM filters, for multiplexing the down-stream data optical signals,
wherein the RN comprises a third wavelength division multiplexer/demultiplexer (WDM3) for demultiplexing the down-stream data optical signals and multiplexing the up-stream data optical signals, and
wherein the plurality of optical network units (ONU 1,ONU 2,...,ONU N) comprises:
a plurality of second WDM filters being connected to an output end of the third WDM3; and
a plurality of second optical transceivers (TRx) being connected to the plurality of second WDM filters.

17. A wavelength division multiplexed optical transmission device comprising:
a transmitting end comprising a plurality of optical transmitters (Tx) and a first wavelength division multiplexer/demultiplexer (WDM1), being connected to the plurality of optical transmitters (Tx), for multiplexing data optical signals outputted from the plurality of optical transmitters (Tx);
a receiving end comprising a plurality of optical receivers (Rx) and a second wavelength division multiplexer/demultiplexer (WDM2), being connected to the plurality of optical receivers (Rx), for demultiplexing the data optical signals multiplexed by the first WDM1; one or more optical fibers for connecting the transmitting end and the receiving end; and
an optical amplifier (OA) being provided on the one or more optical fibers and embodied by using a gain medium for a low-noise multi-wavelength light source.

18. A wavelength division multiplexed optical transmission device comprising:
a transmitting end comprising a plurality of optical transmitters (Tx) and a first wavelength division multiplexer/demultiplexer (WDM1), being connected to the plurality of optical transmitters (Tx), for multiplexing data optical signals outputted from the plurality of optical transmitters (Tx);
a receiving end comprising a plurality of optical receivers (Rx), a second wavelength division multiplexer/demultiplexer (WDM2), being connected to the plurality of optical receivers (Rx), for demultiplexing the data optical signals multiplexed by the first WDM1, a circulator (CIR) being connected to the second WDM2, and an optical amplifier (OA) being connected to the circulator (CIR) and embodied by using a gain medium for a low-noise multi-wavelength light source; and
an optical fiber for connecting the transmitting end and the receiving end,
wherein only one side is anti-reflection coated in the optical amplifier (OA) so that optical signals inputted into the optical amplifier (OA) are amplified and then are reflected and outputted again, and
wherein the circulator (CIR) transmits the data optical signals to the optical amplifier (OA) and transmits the data optical signals amplified by the optical amplifier (OA) to the second WDM2.
